# EUROPEAN PATENT SPECIFICATION

(11) **EP 0 578 603 B1**
(45) Date of publication and mention of the grant of the patent: **08.01.1997**
(21) Application number: 93610034.6
(22) Date of filing: 03.06.1993
(51) Int. Cl.: B29B 17/00, B29C 47/10, B29B 9/06

(54) **An apparatus for producing a granulated material from used thermoplastic material**
Vorrichtung zur Herstellung von granuliertem Material von thermoplastischen Recycling-Formmassen
Appareil pour la production du materiau granulé de materiau thermoplastique de recyclage

(30) Priority: 11.06.1992 DK 766/92
(43) Date of publication of application: 12.01.1994
(73) Proprietor: Wuorela, Raimo, S-290 60 Kyrkhult (SE)
(72) Inventor: Wuorela, Raimo, S-290 60 Kyrkhult (SE)
(74) Representative: Noergaard, Ulrik

(56) References cited:
- EP-A- 0 140 846
- FR-A- 2 575 943
- GB-A- 2 083 663
- US-A- 4 968 463

## Description

The invention relates to an apparatus for producing a granulated material from used thermoplastic material, such as plastics foil, especially old plastic bags, and an aqueous filler material, such as sawdust, said apparatus comprising a cutting unit for the used thermoplastics, where said cutting unit is provided with co-operating, rotating and fixed knives, and a worm extruder unit for plastifying the thermoplastic material, as well as a granulating unit arranged after said worm extruder unit, whereby the cutting unit comprises one or more openings for the feeding of thermoplastic material and filler material.

An apparatus of this type is known, which comprises a cutting unit provided with knives and a worm extruder unit, where the first unit just only touches the other unit, the axes of the units being placed on two skew lines. This apparatus allows nothing but an insignificant transfer of heat from the worm extruder unit to the cutting unit. It is not a question of a simultaneous treatment of waste plastics and aqueous filler material in the cutting unit and drying, i.e. a removal of the water, of the filler material either. The addition of aqueous filler material, such as aqueous sawdust, to the waste plastics in the known apparatus has the disadvantageous effect that the water is transformed into vapour during the passage of the material through the apparatus, which causes strong impacts on the parts of the apparatus which may thereby be damaged.

The object of the invention is to provide an apparatus of the above type which allows a very reliable production of a granulated material from waste plastics and aqueous filler material, said apparatus ensuring that vapour from the filler material does not damage the apparatus during the passage of the waste plastics and the filler material through the apparatus.

The apparatus according to the invention is characterised in that the rotating knives of the cutting unit are arranged on a cylinder unit mounted in an elongated chamber, said knives projecting obliquely outwards from the latter, and where the fastening spots of said knives are preferably placed on at least one helical line on the surface of the cylinder unit, and that the cutting unit is mounted parallel to and opposite the worm extruder unit in such a manner that said worm extruder unit can emit heat to said cutting unit, said cutting unit comprising at least two temperature and/or moisture sensors inside or adjacent the chamber, preferably adjacent the spot where the mixture of plastic material and filler material passes into the worm extruder unit, and that the cutting unit is provided with heat-regulating means controlled by said temperature and/or moisture sensors so as to ensure a regular evaporation of the water in the filler material which is thereby dry when passing from the cutting unit into the worm extruder unit, and that the worm extruder unit is provided with at least two thermostatically controlled auxiliary heat bodies, such as heat tapes, so as primarily to ensure a sufficiently high temperature at the outlet end of the worm extruder unit and secondarily to minimize the heat requirement inside the cutting unit. As a result, a very reliable pulverization of the waste plastics as well as a very reliable drying of the filler material, such as the sawdust, are obtained. The highest temperatures are found in the worm extruder unit, and as the cutting unit and the worm extruder unit are arranged such relative to one another that heat can pass from the worm extruder unit to the cutting unit, the heat inside the worm extruder unit is efficiently utilized. As the temperature and/or moisture sensors on the cutting unit are coupled to the heat-regulating means thereof it is ensured that the temperature/the moisture in the filler material is such at the outlet end of the cutting unit that all the water has evaporated from said filler material when it reaches said outlet end. During the passage of the filler material into the worm extruder said filler material is dry, and accordingly it does not cause an undesired formation of vapour during the rather high temperatures in the worm extruder unit, but mix instead intimately with the thermoplastic material. The resulting mixture can then be extruded from the worm extruder unit in a manner known per se to form the desired granulated material.

According to the invention a connection pipe for the mixture of plastics and filler material may be provided between the outlet end of the cutting unit and the inlet end of the worm extruder unit, and one of the temperature and/or moisture sensors may be mounted on said pipe. In this manner it is especially ensured that the temperature at the connecting pipe is so high that all the water in the filler material, such as sawdust, has evaporated, whereby undesired moisture cannot pass into the worm extruder unit. Such moisture might otherwise cause undesired explosions of vapour.

In addition according to the invention the cylinder unit may comprise a central shaft and a cylinder portion coaxially arranged relative to said shaft, the knives being mounted on said cylinder portion, and the heat-regulating means may be built into or connected to the cylinder unit. As a result, particularly good possibilities apply of regulating the supply of heat to the mixture of thermoplastic material and filler material inside the cutting unit, the heat from the heat-regulating means being fed to the mixture from the inside.

According to the invention, the heat-regulating means may comprise electric heat bodies, such as electric resistance rods built into a cavity in the shaft of the cylinder unit, whereby said heat-regulating means can operate particularly efficiently. In addition, these heat-regulating means do not take up much room.

Moreover according to the invention a heat-conducting in form of a fluid of a high specific heat, such as oil, may have been filled into a cavity between the shaft and the cylinder portion, whereby a particularly reliable transfer of heat from the heat-regulating means to the mixture of thermoplastic material and sawdust is obtained in the chamber of the cutting unit.

In addition according to the invention, the heat-regulating means may comprise a hot-fluid system associated with an external heat source, such as a burner, where the hot, optionally circulating fluid of the system can pass through the hollow shaft of the cylinder portion and/or the cavity between the shaft and the cylinder portion. In this manner it is possible to reduce the costs involved in running the heat-regulating means and consequently the costs involved in running the entire apparatus.

The external heat source may according to the invention be electric, whereby the apparatus takes up less room.

Moreover according to the invention, the knives on the cylinder portion may be arranged in groups of four knives, said knives being mutually displaced 90°, whereby a particularly efficient and advantageous pulverization of the waste plastics is obtained before said waste plastics reaches the worm extruder unit.

According to the invention each knife may be secured to the cylinder portion in an angularly adjustable manner by the lower portion thereof being conical and by said conical portion being put down and locked in a corresponding conically shaped opening in the shaft, such as by means of at least one screw. As a result, each knife can be secured particularly efficiently onto the cylinder portion in such a manner that it is nevertheless relatively easy to replace.

Moreover according to the invention, the worm extruder unit may comprise two worms, whereby said worm extruder unit can operate in a particularly efficient manner.

Furthermore according to the invention the fixed knives may be longitudinally arranged inside and on the wall of the chamber. The resulting pulverization of the used thermoplastic material, such as plastics foil, is particularly efficient as the thermoplastic material is easily introduced between the fixed and the rotating knives and is thereby cut/torn to pieces.

Finally according to the invention a shielding plate may be arranged between the worm extruder unit and the cutting unit, said shielding plate being longitudinally displaceable. In this manner a further regulation of the flow of heat from the worm extruder unit to the cutting unit is allowed as it is possible more or less to guide the heat away from the worm extruder unit, said heat then being guided elsewhere in stead of to the cutting unit.

The invention is explained below with reference to the accompanying drawing, in which
Figure 1 is a side view of an embodiment of the apparatus according to the invention, the cutting unit and the worm extruder unit of the apparatus appearing partly cut through,
Figure 2 illustrates a portion of the cylinder portion of the cutting unit, said Figure showing how a knife can be secured thereto,
Figure 3 is a diagrammatic view of how the various temperature sensors can be arranged,
Figure 4 is a sectional view through a knife and the portions connecting said knife to the shaft,
Figure 5 is a diagrammatic end view of the apparatus of Figure 1, whereby the terminal plate of the apparatus has been removed, and
Figure 6 illustrates the apparatus of Figure 1, whereby the heat-regulating means of the cutting unit comprise a hot-fluid system associated with one end of the cylinder unit.

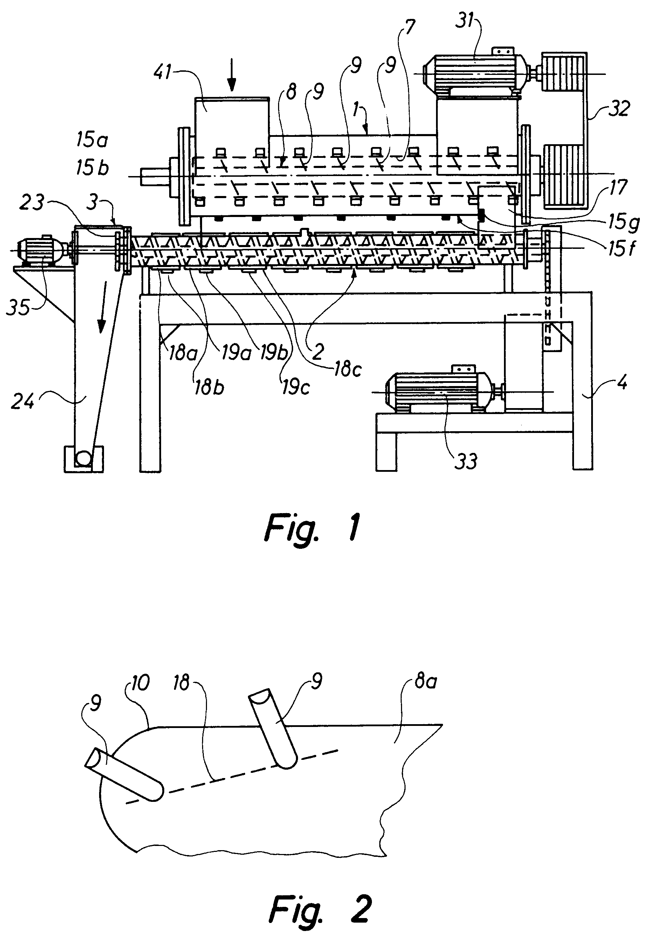

The apparatus of Figure 1 is to be used for the production of a granulated material from thermoplastic waste material, such as plastics foil, especially old plastic bags, and an aqueous filler material, such as sawdust. The apparatus comprises a cutting unit 1 and a worm extruder unit 2 arranged therebelow and followed by a granulating unit 3. All the units are mounted on a frame 4.

The cutting unit 1 is elongated and optionally as long as the worm extruder unit 2. The cutting unit 1 comprises a chamber 7 in which a longitudinal cylinder unit 8 is mounted, a plurality of knives 9 being mounted on said cylinder unit 8. A hopper 41 provided with an upwardly facing inlet opening is arranged at the left end of the cutting unit for the supply of thermoplastic material and filler material. The materials may optionally be supplied through their respective hopper.

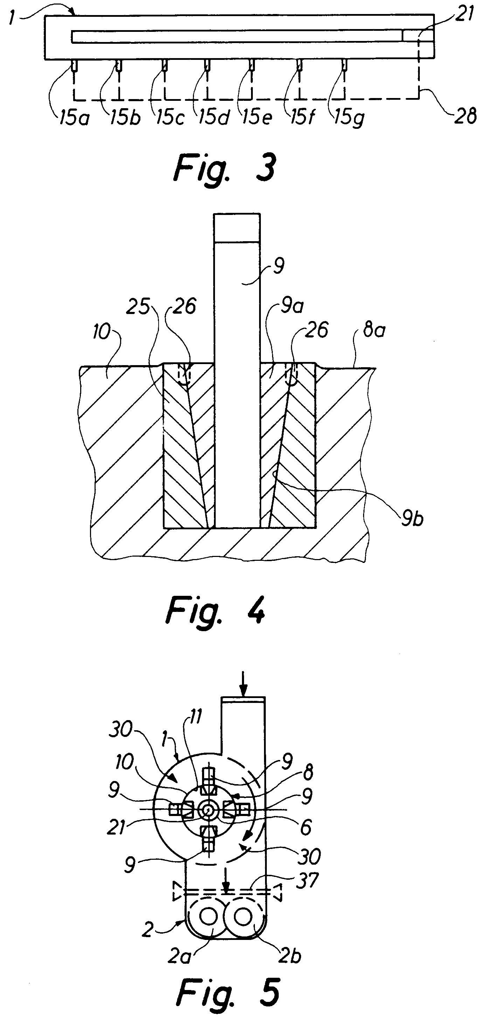

The cylinder unit 8 comprises a shaft 6, cf. Figure 5, and a cylinder portion 10 coaxially arranged relative to said shaft. The knives 9 are mounted on the cylinder portion 10 in such a manner that they project obliquely outwards relative to the axis of the cylinder unit 8, cf. Figure 1. The securing spots of the knives 9 on the cylinder portion 10 are preferably arranged along at least one helical line 18 on the surface 8a of the cylinder portion 10, cf. Figure 2. The cutting unit is provided with heat-regulating means 21 in form of actual heat bodies extending in almost the entire length of the cutting unit, cf. Figure 5. In addition, the cutting unit is provided with at least two temperature and/or moisture sensors along its surface, i.e. the sensors extend into the chamber 7. These temperature and/or moisture sensors 15a-15g are coupled to and control the heat-regulating means 21 in such a manner that a regular evaporation takes place inside the chamber 7 of the water in the filler material with the result that the latter is dry when it passes into the worm extruder unit 2 together with the thermoplastic material through a connecting pipe 17 between the cutting unit 1 and said worm extruder unit 2. Figure 1 shows seven temperature and/or moisture sensors 15a-15g (not all sensors are provided with reference numerals), and of these sensors the temperature and/or moisture sensors 15a and 15g are of importance, and the sensor 15g on the connecting pipe 17 is particularly important.

As illustrated in Figure 1, the worm extruder unit 2 is provided with heating means, such as auxiliary heat bodies 18a, 18b, 18c, preferably in form of electric heat tapes. These means are controlled by the temperature sensors 19a, 19b, 19c ..., which as shown are preferably built into the auxiliary heat bodies 18a, 18b, 18c.

The knives 9 can be arranged in groups of four knives, cf. Figure 5, said knives being mutually displaced 90°. Figure 1 shows how two opposing knives extend substantially parallel to one another.

Two further knives should be imagined which also extend in parallel from the plane of the paper and behind said paper, respectively. The rotating knives co-operate with some fixed knives 30 extending longitudinally inside the chamber 7 and being secured to the wall thereof, cf. Figure 5.

Figure 4 shows how each knife 9 can be secured to the shaft 68 by the lower end of said knife being provided with a conical body 9a, which in turn is put into a correspondingly shaped conical opening 9b in a body 25 embedded in the surface 8a of the cylinder portion 10. The conical body 9a is screwed onto the body 25 by means of screws 26.

In order to increase the capacity of the apparatus, the worm extruder unit 2 can comprise two worms, cf. at 2a and 2b in Figure 4.

As it appears, the worm extruder unit is used for an efficient plastification of the supplied thermoplastic material at the same time as the filler material used as filler is intimately mixed with said plastics in such a manner that a homogenous mixture is obtained.

The granulating unit 3 can in principle be structured as a "meat machine", where the material leaves the apparatus in thin strands. Rotating knives 23 cut the strands into equally long pieces, whereby granules are formed. The granulated material can be carried to a storing silo not shown through a pipe 24.

The heat-regulating means 21 shown in Figure 5 can be electric rods capable of emitting heat in the shaft 6. A heat-conducting fluid, such as oil, can, if desired, be filled into the cavity 11 between the shaft 6 and the cylinder portion 19, where the oil then transfers the heat from the shaft to the cylinder portion and consequently to the knives 9.

Figure 3 shows the temperature and/or moisture sensors 15a, 15b, 15c .... 15f, which are coupled to and control the heat-regulating bodies 21 in such a manner that the supply of energy is increased to the rods 21 in case the temperature becomes too low on the spot detected and vice versa.

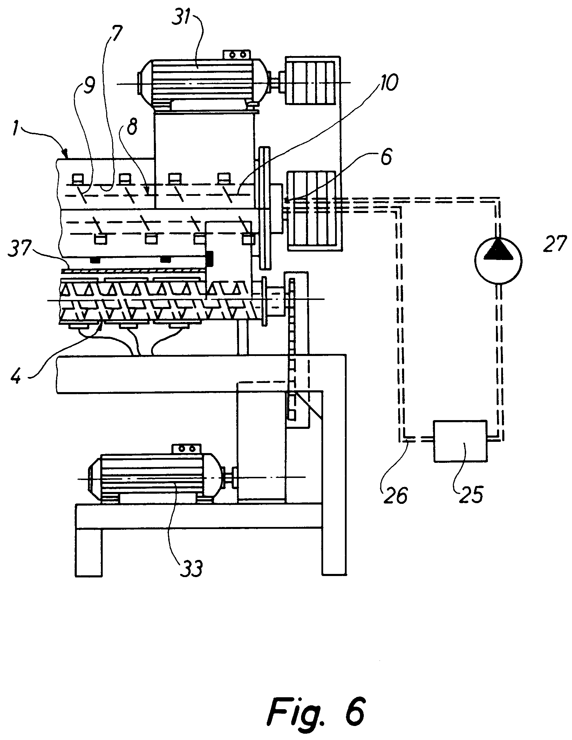

Figure 6 is a diagrammatic view of the heat-regulating means of the cutting unit 1. Instead of being built into the unit 1, these means can be mounted outside said unit. Then the heat-regulating means can comprise an outer heat source 25, such as a burner, for instance an oil burner, which forms part of a pipe circuit 28 communicating with a cavity in the shaft 6, and optionally both with this cavity and a cavity 11 between the shaft 6 and the cylinder portion 10, cf. Figure 5. The pipe circuit comprises a pump 27 ensuring the necessary circulation of water. The temperature and/or moisture sensors 15f and 15g are connected to the burner 25 in a manner not shown. These sensors control the burner in such a manner that the emission of heat of the burner is increased when it becomes too cold or too moist, respectively, at the connecting pipe 17, and vice versa. The heat source 25 can also be electric.

It should be noted concerning the mechanical operation of the individual units 1, 2, 3, that the cutting unit can be activated by means of a driving motor 31 associated with a belt drive 32, whereas the worm extruder unit 2 can be activated by means of a driving motor 33 associated with chains 34. The rotating knives 23 of the granulating unit can be activated by means of a driving motor 35. During the running, the cylinder unit 8 and the associated knives 9 of the cutting unit rotate.

As illustrated in Figure 6, a shielding plate 37 can be coupled between the cutting unit 1 and the worm extruder unit 4. The shielding plate is preferably longitudinally displaceable in such a manner that the emission of heat from the worm extruder unit to the cutting unit can be more or less restricted. It is important to note that the thermostatic sensors 19a, 19b, 19c control the heat tapes 18a, 18b, 18c in such a manner that it is ensured that the treated mixture of materials has the correct temperature at the outlet end of the worm extruder unit.

Particularly suited thermoplastic materials in the present apparatus are polyethylene (MD, LD or HD), polypropene, polyamide or polyvinyl chloride. Waste plastics in form of so-called returned plastics of a varying quality can advantageously be used. Today most of such materials must be destructed or deposited because no use applies to these materials.

The present invention provides, however, a new use of this material, and accordingly the invention can be considered improving the environment. Nothing prevents colours or softeners from being added to the thermoplastic material.

Examples of filler materials are for instance mass waste resulting from the production of paper, and sawdust resulting from the wood industry. The waste should be of a particle size of 0.02 to 10 mm, preferably 0.5 to 2 mm.

The granulated material can for instance contain 95 to 10% by weight of mass waste or sawdust and 5 to 90% by weight of plastics. The produced granulated material is easy to handle and to use in the dosage devices used in machines within the plastics industry. It is advantageously used within the furniture and construction industries, as it is easy to extrude furniture parts or construction parts from said material.

The operation of the apparatus is explained below:

50 kg of returned plastics foil of the type polyethylene (LD) and 50 kg of sawdust were together introduced into the cutting unit 1, wherein the materials stayed for approximately 3 min. Now the temperature of the plastics and the sawdust increased to approximately 100°C due to frictional heating and the heat-regulating means as well as heat from the worm extruder unit, at the same time as the sawdust was dried. The water contained in the sawdust evaporated and the vapour oozed out of the cutting unit through the inlet opening of the hopper 41. The mixture of plastics and sawdust at the right end of the cutting unit 1 presented now a temperature of approximately 100°C, as it was free of moisture, and slipped downwards into the worm extruder unit 2.

The worm(s) of the worm extruder unit homogenized, plastified, and conveyed the material while subjecting it to an additional heating in such a manner that the material reached a temperature of approximately 170°C. Then the material was extruded and granulated in the granulating unit 3 and then air-conveyed through the pipe system 24 to a storing silo. The terminating temperature of the granulated material was approximately 20°C. No signs of formation of vapour ever appeared during the passage of the material through the worm extruder unit.

Examples of filler material are for instance organic fibre material, especially cellulosis fibres and wood pulp, such as sawdust, as well as olivary nucleuses.

The invention can be varied in many ways without therefore deviating from the scope thereof.

## Claims

1. An apparatus for producing a granulated material from used thermoplastic material, such as plastics foil, especially old plastic bags, and an aqueous filler material, such as sawdust, said apparatus comprising a cutting unit (1) for the used thermoplastics, where said cutting unit is provided with co-operating, rotating and fixed knives (9, 30), and a worm extruder unit (2) for plastifying the thermoplastic material, as well as a granulating unit (3) arranged after said worm extruder unit, whereby the cutting unit (1) comprises one or more openings (41) for the feeding of thermoplastic material and filler material, characterised in that the rotating knives (9) of the cutting unit (1) are arranged on a cylinder unit (8) mounted in an elongated chamber (7), said knives (9) projecting obliquely outwards from the latter, and where the fastening spots of said knives are preferably placed on at least one helical line (18) on the surface (8a) of the cylinder unit (8), and that the cutting unit (1) is mounted parallel to and opposite the worm extruder unit (2) in such a manner that said worm extruder unit can emit heat to said cutting unit, said cutting unit (1) comprising at least two temperature and/or moisture sensors (15a-15g) inside or adjacent the chamber (7), preferably adjacent the spot (17) where the mixture of plastic material and filler material passes into the worm extruder unit, and that the cutting unit (1) is provided with heat-regulating means (21, 25, 26, 27) controlled by said temperature and/or moisture sensors (15a-15g) so as to ensure a regular evaporation of the water in the filler material which is thereby dry when passing from the cutting unit (1) into the worm extruder unit (2), and that the worm extruder unit is provided with at least two thermostatically controlled (19a, 19b, 19c) auxiliary heat bodies (18a, 18b, 18c), such as heat tapes, so as primarily to ensure a sufficiently high temperature at the outlet end of the worm extruder unit (2) and secondarily to minimize the heat requirement inside the cutting unit (1).

2. An apparatus as claimed in claim 1, characterised in that a connecting pipe (17) for the mixture of plastics and filler material is provided between the outlet end of the cutting unit (1) and the inlet end of the worm extruder unit (2), and that one of the temperature and/or moisture sensors (15g) is mounted on said pipe (17).

3. An apparatus as claimed in claim 1 or 2, characterised in that the cylinder unit (8) comprises a central shaft (6) and a cylinder portion (10) coaxially arranged relative to said shaft, the knives (9) being mounted on said cylinder portion (10), and that the heat-regulating means (21) are built into or connected to the cylinder unit (8).

4. An apparatus as claimed in claim 1, 2 or 3, characterised in that the heat-regulating means comprise electric heat bodies, such as electric resistance rods (21) built into a cavity in the shaft (6) of the cylinder unit.

5. An apparatus as claimed in one or more of the preceding claims 1 to 4, characterised in that a heat-conducting medium in form of a fluid of a high specific heat, such as oil, has been filled into a cavity (11) between the shaft (6) and the cylinder portion (10).

6. An apparatus as claimed in claim 1, 2 or 3, characterised in that the heat-regulating means (25, 26, 27) comprise a hot-fluid system associated with an external heat source, such as a burner (25), where the hot, optionally circulating fluid of the system can pass through the hollow shaft (6) of the cylinder portion and/or the cavity (11) between the shaft (6) and the cylinder portion (10).

7. An apparatus as claimed in claim 6, characterised in that the external heat source (25) is electric.

8. An apparatus as claimed in one or more of the preceding claims 1 to 7, characterised in that the knives (9) on the cylinder portion are arranged in groups of four knives, said knives being mutually displaced 90°.

9. An apparatus as claimed in one or more of the preceding claims 1 to 8, characterised in that each knife (9) is secured to the cylinder portion (10) in an angularly adjustable manner by the lower portion thereof being conical and by said conical portion being put down and locked in a corresponding conically shaped opening (9b) in the shaft, such as by means of at least one screw (26).

10. An apparatus as claimed in one or more of the preceding claims 1 to 9, characterised in that the worm extruder unit (2) comprises two worms (2a, 2b).

11. An apparatus as claimed in one or more of the preceding claims 1 to 10, characterised in that the fixed knives (30) are longitudinally arranged inside and on the wall of the chamber (7).

12. An apparatus as claimed in one or more of the preceding claims 1 to 11, characterised in that a shielding plate (37) is arranged between the worm extruder unit (2) and the cutting unit (1), said shielding plate being longitudinally displaceable.

## Patentansprüche

1. Vorrichtung zum Erzeugen eines granulierten Materials aus gebrauchtem thermoplastischen Material, z.B. Plastikfolie, insbesondere alten Plastiktüten, und aus einem wässerigen Füllmaterial, z.B. Sägemehl, mit einer für die gebrauchten Thermoplaste vorgesehenen Schneideeinheit (1), die miteinander zusammenwirkende Drehmesser und feststehende Messer (9,30) aufweist, einer Schneckenextrudereinheit (2) zum Plastifizieren des thermoplastischen Materials, und einer hinter der Schneckenextrudereinheit angeordneten Granuliereinheit (3), wobei die Schneideeinheit (1) eine oder mehrere Öffnungen (41) zum Zuführen des thermoplastischen Materials und des Füllmaterials aufweist,
**dadurch gekennzeichnet,**
daß die Drehmesser (9) der Schneideeinheit (1) an einer in einer länglichen Kammer (7) montierten Zylindereinheit (8) angeordnet sind, die Messer (9) von der Zylindereinheit (8) schräg auswärts abstehen, die Befestigungspunkte der Messer vorzugsweise auf mindestens einer schraubenförmigen Linie (18) auf der Oberfläche (8a) der Zylindereinheit (8) angeordnet sind, die Schneideeinheit (1) parallel zu der Schneckenextrudereinheit (2) und dieser gegenüberliegend derart angeordnet ist, daß die Schneckenextrudereinheit Wärme an die Schneideeinheit abgeben kann, die Schneideeinheit (1) innerhalb oder nahe der Kammer (7) mindestens zwei Temperatur- und/oder -Feuchtigkeitssensoren (15a-15g) aufweist, die vorzugsweise nahe dem Punkt (17) angeordnet sind, an dem die Mischung aus Plastikmaterial und Füllmaterial in die Schneckenextrudereinheit eintritt, die Schneideeinheit (1) mit einer Wärmereguliereinheit (21, 25,26,27) versehen ist, die mittels der Temperatur- und/oder -Feuchtigkeitssensoren (15a-15g) derart gesteuert wird, daß eine regelmäßige Verdunstung des in dem Füllmaterial enthaltenen Wassers gewährleistet ist und das Füllmaterial somit trocken ist, wenn es aus der Schneideeinheit (1) in die Schneckenextrudereinheit (2) eintritt, und die Schneckenextrudereinheit mit mindestens zwei thermostatisch gesteuerten (19a,19b, 19c) Hilfsheizkörpern (18a,18b,18c), z.B. Heizbändern, versehen ist, um in erster Linie eine hinreichend hohe Temperatur an dem Auslaßende der Schneckenextrudereinheit (2) zu gewährleisten und in zweiter Linie den innerhalb der Schneideeinheit (1) erforderlichen Wärmebedarf zu minimieren.

2. Vorrichtung nach Anspruch 1, dadurch gekennzeichnet, daß zwischen dem Auslaßende der Schneideeinheit (1) und dem Einlaßende der Schneckenextrudereinheit (2) ein Verbindungsrohr (17) für die Mischung aus Plastik und Füllmaterial vorgesehen ist und daß einer der Temperatur- und/oder -Feuchtigkeitssensoren (15g) an dem Rohr (17) montiert ist.

3. Vorrichtung nach Anspruch 1 oder 2, dadurch gekennzeichnet, daß die Zylindereinheit (8) eine zentrale Welle (6) und einen relativ zu der Welle koaxial angeordneten Zylinderteil (10) aufweist, an dem die Messer (9) montiert sind, und die Wärmereguliereinrichtungen (21) in die Zylindereinheit (8) eingebaut oder mit dieser verbunden sind.

4. Vorrichtung nach Anspruch 1, 2 oder 3, dadurch gekennzeichnet, daß die Wärmereguliereinrichtungen elektrische Heizkörper, z.B. stabförmige elektrische Widerstände (21), aufweisen, die in einen in der Welle (6) der Zylindereinheit ausgebildeten Hohlraum eingebaut sind.

5. Vorrichtung nach einem oder mehreren der vorhergehenden Ansprüche 1 bis 4, dadurch gekennzeichnet, daß ein wärmeleitendes Medium in Form eines Fluids mit hoher spezifischer Wärme, z.B. Öl, in einen zwischen der Welle (6) und dem Zylinderteil (10) ausgebildeten Hohlraum (11) gefüllt ist.

6. Vorrichtung nach Anspruch 1, 2 oder 3, dadurch gekennzeichnet, daß die Wärmereguliereinheit (25,26,27) ein Wärmefluidsystem aufweist, das mit einer externen Wärmequelle, z.B. einem Brenner (25), verbunden ist, wobei das warme, wahlweise umlaufende Fluid des Systems durch die hohle Welle (6) des Zylinderteils und/oder den zwischen der Welle (6) und dem Zylinderteil (10) ausgebildeten Hohlraum (11) hindurchtreten kann.

7. Vorrichtung nach Anspruch 6, dadurch gekennzeichnet, daß die externe Wärmequelle (25) elektrisch ist.

8. Vorrichtung nach einem oder mehreren der vorhergehenden Ansprüche 1 bis 7, dadurch gekennzeichnet, daß die an dem Zylinderteil angeordneten Messer (9) in Gruppen von vier Messern angeordnet sind, wobei die Messer relativ zueiander um 90° versetzt sind.

9. Vorrichtung nach einem oder mehreren der vorhergehenden Ansprüche 1 bis 8, dadurch gekennzeichnet, daß jedes Messer (9) winklig einstellbar an dem Zylinderteil (10) befestigt ist, indem der untere Bereich des Messers (9) konisch ausgebildet ist und der konische Bereich in eine entsprechend konisch ausgebildete Öffnung (9b) der Welle eingeführt und, z.B. mittels mindestens einer Schraube (26), darin verriegelt ist.

10. Vorrichtung nach einem oder mehreren der vorhergehenden Ansprüche 1 bis 9, dadurch gekennzeichnet, daß die Schneckenextrudereinheit (2) zwei Schnecken (2a,2b) aufweist.

11. Vorrichtung nach einem oder mehreren der vorhergehenden Ansprüche 1 bis 10, dadurch gekennzeichnet, daß die feststehenden Messer (30) in Längsrichtung innerhalb und an der Wand der Kammer (7) angeordnet sind.

12. Vorrichtung nach einem oder mehreren der vorhergehenden Ansprüche 1 bis 11, dadurch gekennzeichnet, daß zwischen der Schneckenextrudereinheit (2) und der Schneideeinheit (1) eine in Längsrichtung verschiebbare Abschirmplatte (37) angeordnet ist.

## Revendications

1. Appareil pour produire une matière sous forme de granulés à partir d'une matière thermoplastique de recyclage, comme par exemple une feuille de matière plastique, spécialement des vieux sacs en matière plastique, et d'une matière de charge aqueuse, comme par exemple de la sciure de bois, ledit appareil comprenant un ensemble de coupe (1) pour la matière thermoplastique de recyclage, ledit ensemble de coupe étant pourvu de couteaux rotatifs et fixes coopérants (9, 30), et un ensemble extrudeuse à vis (2) pour plastifier la matière thermoplastique, ainsi qu'un ensemble de granulation (3) disposé en aval de l'ensemble extrudeuse à vis, l'ensemble de coupe (1) comprenant une ou plusieurs ouvertures (41) destinées à l'alimentation en matière thermoplastique et en matière de charge, caractérisé en ce que les couteaux rotatifs (9) de l'ensemble de coupe (1) sont disposés sur un ensemble cylindre (8) monté dans une chambre (7) de forme allongée, lesdits couteaux (9) faisant saillie obliquement vers l'extérieur de cette dernière, et les points de fixation desdits couteaux se trouvant, de préférence, sur au moins une ligne hélicoïdale (18) située sur la surface (8a) de l'ensemble cylindre (8) et en ce que l'ensemble de coupe (1) est monté parallèlement à l'ensemble extrudeuse à vis (2) et en face de celle-ci de telle manière que ledit ensemble extrudeuse peut émettre de la chaleur vers ledit ensemble de coupe, ledit ensemble de coupe (1) comprenant au moins deux capteurs de température et/ou d'humidité (15a-15g) à l'intérieur de la chambre (7) ou en contiguïté avec celle-ci, de préférence en contiguïté avec les points (17) où le mélange de matière plastique et de matière de charge pénètre dans l'extrudeuse à vis, et en ce que l'ensemble de coupe (1) est pourvu d'un moyen de régulation thermique (21, 25, 26, 27) commandé par lesdits capteurs de température et/ou d'humidité (15a-15g) de manière à assurer une évaporation régulière de l'eau se trouvant dans la matière de charge qui, de ce fait, est sèche quand elle est transférée de l'ensemble de coupe (1) à l'ensemble extrudeuse à vis (2), et en ce que l'ensemble extrudeuse à vis est muni d'au moins deux corps chauffants auxiliaires (18a, 18b, 18c) commandés par voie thermostatique (19a, 19b, 19c), comme par exemple des rubans chauffants, de façon à assurer principalement une température suffisamment élevée à l'extrémité de sortie de l'ensemble extrudeuse à vis (2) et subsidiairement à minimiser les exigences en chaleur à l'intérieur de l'ensemble de coupe (1).

2. Appareil selon la revendication 1, caractérisé en ce qu'un conduit de raccordement (17) pour le passage du mélange de matière plastique et de matière de charge est disposé entre l'extrémité de sortie de l'ensemble de coupe (1) et l'extrémité d'entrée de l'ensemble extrudeuse à vis (2) et en ce qu'un (15g) des capteurs de température et/ou d'humidité est monté sur ledit conduit (17).

3. Appareil selon la revendication 1 ou 2, caractérisé en ce que l'ensemble cylindre (8) comprend un arbre central (6) et une partie cylindre (10) disposée coaxialement par rapport à l'arbre, les couteaux (9) étant montés sur ladite partie cylindre (10), et en ce que le moyen de régulation thermique (21) est incorporé dans le cylindre (8) ou fixé à ce dernier.

4. Appareil selon la revendication 1, 2 ou 3, caractérisé en ce que le moyen de régulation thermique comprend des corps chauffants électriques, tels que des barres formant résistances électriques (21 ) incorporées dans une cavité de l'arbre (6) de l'ensemble cylindre.

5. Appareil selon une ou plusieurs des revendications précédentes 1 à 4, caractérisé en ce qu'un milieu thermoconducteur, sous la forme d'un fluide à chaleur massique élevée, comme par exemple de l'huile, remplit la cavité (11) entre l'arbre (6) et la partie cylindre (10).

6. Appareil selon la revendication 1, 2 ou 3, caractérisé en ce que le moyen de régulation thermique (25, 26, 27) comprend un système de fluide chaud associé à une source de chaleur extérieure, comme par exemple un brûleur (25), le fluide chaud, facultativement en circulation, du système pouvant passer à travers l'arbre creux (6) de la partie cylindre et/ou la cavité (11) entre l'arbre (6) et la partie cylindre (10).

7. Appareil selon la revendication 6, caractérisé en ce que la source de chaleur extérieure (25) est électrique.

8. Appareil selon une ou plusieurs des revendications précédentes 1 à 7, caractérisé en ce que les couteaux (9) se trouvant sur la partie cylindre sont disposés par groupes de quatre couteaux, lesdits couteaux étant décalés mutuellement de 90°.

9. Appareil selon une ou plusieurs des revendications précédentes 1 à 8, caractérisé en ce que chaque couteau (9) est fixé à la partie cylindre (10) d'une manière réglable angulairement par le fait que sa partie inférieure est conique et que ladite partie conique est enfoncée et bloquée dans une ouverture (9b) de forme conique correspondante de l'arbre, par exemple au moyen d'au moins une vis (26).

10. Appareil selon une ou plusieurs des revendications précédentes 1 à 9, caractérisé en ce que l'ensemble extrudeuse à vis (2) comprend deux vis sans fin (2a, 2b).

11. Appareil selon une ou plusieurs des revendications précédentes 1 à 10, caractérisé en ce que les couteaux fixes (30) sont disposés dans le sens longitudinal à l'intérieur de la chambre (7) et sur la paroi de celle-ci.

12. Appareil selon une ou plusieurs des revendications précédentes 1 à 11, caractérisé en ce qu'une plaque de protection (37) est disposée entre l'ensemble extrudeuse à vis (2) et l'ensemble de coupe (1), ladite plaque de protection pouvant être déplacée dans le sens longitudinal.
